(19) Europäisches Patentamt / European Patent Office / Office européen des brevets

(11) **EP 3 842 129 B1**

(12) **EUROPEAN PATENT SPECIFICATION**

(45) Date of publication and mention
of the grant of the patent:
**06.03.2024 Bulletin 2024/10**

(21) Application number: **19219712.7**

(22) Date of filing: **24.12.2019**

(51) International Patent Classification (IPC):
**B01D 61/18** *(2006.01)*      **B01D 63/02** *(2006.01)*

(52) Cooperative Patent Classification (CPC):
**B01D 61/18; B01D 63/02;** B01D 2313/02;
B01D 2313/06; B01D 2315/08

(54) **STERILE FILTER ASSEMBLY**

STERILFILTERBAUGRUPPE

ENSEMBLE DE FILTRES STÉRILISATEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.06.2021 Bulletin 2021/26**

(73) Proprietor: **Gambro Lundia AB
226 43 Lund (SE)**

(72) Inventor: **Flieg, Ralf
72414 Rangendingen (DE)**

(74) Representative: **Perchenek, Nils
Gambro Dialysatoren GmbH
Legal and Intellectual Property
Holger Crafoord-Strasse 26
72379 Hechingen (DE)**

(56) References cited:
**US-B2- 7 622 041**

## Description

## Technical Field

The present disclosure relates to an assembly of sterile filters, a process for manufacturing the assembly, and a method of operating the assembly.

## Background of the Invention

Liquids destined to be infused into a patient's body, in particular into the bloodstream of a patient, have to be free of pyrogens and particulate matter. To protect the patient, infusion solutions therefore typically are passed through a filter device installed in the infusion line before they enter the patient's body. Commercially available devices generally comprise a microporous flat sheet membrane. Filter devices comprising hollow fiber membranes instead of flat sheet membranes also have been proposed, e.g., in US 4 267 053 A or EP 3 388 141 A1.

Sterile filters are also used to produce sterile RO water for the preparation of PD solutions at a patient's home. It is important to make sure that the filters keep the right position during set up, priming and treatment, so that their performance is secured. Filters also should be prevented from falling to the ground, as patients risk stepping on them and damaging the device.

To maximize patient safety, two sterile filters connected in series are often used, which can lead to a situation where the position of the filters is not well defined and particularly the second filter may be located on the ground.

US 7 622 041 B2 discloses a method for manufacturing a filter device having hollow-fiber membranes arranged in more than one filtration compartment within a filter housing. A split shell is bonded or welded together along longitudinal seams. Internal separating walls within the housing are formed integrally with the shell portions of the housing to form adjacent filtration compartments when the housing portions are joined together.

It would be desirable to have a sterile filtration device which overcomes at least some of the drawbacks of the known sterile filter sets.

## Summary

The present disclosure provides a sterile dead-end filtration filter assembly, a process for manufacturing the assembly, and a method of operating the assembly. The assembly comprises at least two sterile filters connected in series and fixed in position by shrink-tubing.

## Short Description of the Drawings

Fig. 1     is a schematic side view of an exemplary embodiment of the sterile filter assembly of the present disclosure;

Fig. 2     is a schematic side view of another exemplary embodiment of the sterile filter assembly of the present disclosure.

## Detailed Description

The present disclosure provides a sterile dead-end filtration filter assembly comprising

     a) a first sterile filter comprising a tubular housing having an inlet and an outlet for a liquid and having a plurality of semipermeable hollow fiber membranes arranged therein, one end of the hollow fiber membranes being in fluid communication with the inlet and the other end of the hollow fiber membranes being sealed;

     b) a second sterile filter comprising a tubular housing having an inlet and an outlet for a liquid and having a plurality of semipermeable hollow fiber membranes arranged therein, one end of the hollow fiber membranes being in fluid communication with the inlet and the other end of the hollow fiber membranes being sealed;

     c) a tube connecting the outlet of the first filter to the inlet of the second filter; and

     d) a shrink tubing enveloping at least parts of both filters, attaching the filters to each other and fastening the filters in a fixed position.

The sterile filter assembly of the present disclosure comprises at least two sterile filters connected in series. Additional sterile filters may be incorporated into the assembly. For instance, a third sterile filter may be connected in series to the second sterile filter. If higher flow rates are desired, a second train of sterile filters can be connected in parallel to the first train formed by the first and second sterile filter. The assembly then may comprise four sterile filters, arranged in two subunits each comprising two filters connected in parallel, the subunits being connected in parallel.

In one embodiment of the sterile filter assembly, the first sterile filter and the second sterile filter are arranged in parallel. In another embodiment, the first sterile filter and the second sterile filter are arranged in antiparallel.

In one embodiment of the assembly, the sterile filters are capillary filters as described in EP 3 388 141 A1. The capillary filter devices of EP 3 388 141 A1 comprise i. a header section having an inlet for a liquid; ii. a disk (12) having a plurality of bores, each bore holding a first end of a semipermeable hollow fiber membrane protruding from the disk, the semipermeable hollow fiber membrane being sealed at its second end; and iii. a tubular section having an outlet for a liquid; the header section covering a first face of the disk; and the tubular section covering a second face of the disk opposite to the first face, and enclosing the plurality of semipermeable hollow fiber membranes; wherein the header section, the disk, and the tubular section each comprise a thermoplastic polymer; and the disk comprises an IR-absorptive pigment selected from the group consisting of carbon black; IR-absorptive inorganic pigments; and IR-absorptive organic pigments.

In one embodiment of the sterile filters, the semipermeable hollow fiber membranes have an inner diameter of from 2.8 to 4.0 mm, for instance, from 3.0 to 3.7 mm, or from 3.1 to 3.5 mm; and a wall thickness of from 100 to 500 $\mu$m, for instance, from 180 to 320 $\mu$m. The outer diameter of the semipermeable hollow fiber membranes is larger than 3 mm. The ratio of inner diameter to wall thickness of the membranes is larger than 10, or even larger than 15. Membranes having a large ratio of inner diameter to wall thickness, i.e. thin-walled membranes, are more flexible and easily deformable. These membranes are less prone to form kinks on bending than thickwalled membranes. The ends of the thin-walled hollow fibers also can readily be closed by crimping to produce dead-end filter elements.

In one embodiment, the semipermeable hollow fiber membranes 14 have a mean flow pore size, determined by capillary flow porometry, in the range of from 0.2 to 0.5 $\mu$m.

Capillary flow porometry is a liquid extrusion technique in which the flow rates through wet and dry membranes at differential gas pressure are measured. Before measurement, the membrane is immersed in a low surface tension liquid (e.g., a perfluoroether commercially available under the trade name Porofil®) to ensure that all pores including the small ones are filled with the wetting liquid. By measuring the pressure at which the liquid is pressed out of the pores their corresponding diameter can be calculated using the Laplace equation. With this method, the pore size distribution of those pores that are active in the mass transport is determined. Dead-end and isolated pores are omitted. The hollow fiber membranes are measured inside-out.

Laplace equation:

$$Dp = 4\ Y\ \cos\ \Theta\ /\ \Delta P$$

Dp = diameter of pores [m]
Y = surface tension [N/m]; for Porofil® 0.016 [N/m]
$\Delta$P = pressure [Pa]
Cos $\Theta$ = contact angle; for complete wetting cos $\Theta$ = 1

In one embodiment, the semipermeable hollow fiber membranes comprise polyethersulfone (PESU) and polyvinylpyrrolidone (PVP). In one embodiment, the semipermeable hollow fiber membranes additionally comprise a polymer bearing cationic charges. Examples of suitable polymers bearing cationic charges include polyethyleneimines, modified polyethyleneimines, and modified polyphenyleneoxides. Semipermeable hollow fiber membranes 14 comprising a polymer bearing cationic charges show increased retention of endotoxins.

The overall effective surface area of the plurality of semipermeable hollow fiber membranes in the sterile filters generally is larger than 5 cm$^2$. The effective surface area is the portion of the surface area of the semipermeable hollow fiber membranes available for the filtration of liquid; i.e., the portion that is not covered or sealed, like the second ends of the semipermeable hollow fiber membranes. In one embodiment, the overall effective surface area of the plurality of semipermeable hollow fiber membranes is in the range of from 10 cm$^2$ to 250 cm$^2$, e.g., from 20 to 100 cm$^2$, or from 30 to 60 cm$^2$.

At least parts of the sterile filters of the assembly are enveloped in shrink tubing, thereby attaching the filters to each other and fastening them in a fixed position. In one embodiment, the entire length of the filter housings is enveloped by shrink tubing. In another embodiment, only part of the filter housings is enveloped in shrink tubing, for instance, a length of 5 mm to 50 mm of the housing. In one embodiment, a section of shrink-tubing having a length in the range of from 5 to 30 mm is used to envelop the filters. In one embodiment, the shrink tubing has a wall strength after shrinking of 0.2 to 2.5 mm.

The inner diameter of the shrink-tubing is slightly larger than the combined outer diameters of the filters and, optionally, of the connecting tube. In one embodiment, the inner diameter of the shrink-tubing is 1 to 10 mm larger than the combined outer diameters. As an alternative to shrink tubing, a shrink foil may be used to wrap at least parts of the filters. After shrinking, the foil also provides a fixture for the filters and, optionally, the connecting tube.

In a further embodiment of the sterile filter assembly, the tube connecting the outlet of the first filter to the inlet of the second filter is also enveloped by the shrink tubing. This is especially useful when the filters are arranged in parallel, as the connecting tube is longer and might get caught on hooks or protrusions when it is not fastened to the filter housings.

In one embodiment, the shrink-tubing is comprised of at least one elastomer, e.g., Viton®. In one embodiment, the shrink-tubing is comprised of at least one polyolefin, silicone, polyvinyl chloride (PVC), or fluoropolymer. Examples of suitable fluoropolymers include polyvinylidene fluoride (PVDF), polytetrafluoroethylene (PTFE), fluorinated ethylene propylene (FEP), and perfluoroalkoxy alkanes (PFA).

In one embodiment, the lumen of the shrink-tubing is coated with an adhesive. Examples of suitable adhesives include polyamide hot melt adhesives, polyolefin hot melt adhesives, fluorinated ethylene propylene (FEP), and perfluoroalkoxy alkanes (PFA). During the shrinking step, the adhesive forms an additional bonding between the tubing and the filter housings, securing the tubing and preventing it from slipping off the filters. This is particularly useful with tapered filter housings.

The sterile filter assembly can be obtained by a process which comprises arranging a first sterile filter and a second sterile filter side by side within a shrink tubing and subsequently heating the shrink tubing to shrink it and to attach the filters to each other and fasten them in a fixed position.

In a variation of the process, a tube connecting an outlet of the first sterile filter to an inlet of the second sterile filter is also arranged within the shrink tubing, and the shrink tubing is subsequently heated to shrink it and to attach the filters to each other and fasten them in a fixed position. The connecting tube is also enveloped by the shrink tubing.

The shrink-tubing is shrunk to attach the filters to each other and fasten them in a fixed position. In one embodiment, the shrinking process is effected by heating the shrink-tubing. Depending on the type of shrink-tubing used, the shrink temperature is in the range of from 80 to 330°C, for instance, from 90 to 175°C or from 90 to 120°C.

The shrinking step can be performed prior to or during sterilization of the sterile filter assembly. In one embodiment of the process, the shrinking of the shrink-tubing is performed by sterilizing the sterile filter assembly with steam. During steam sterilization, the sterile filter assembly is heated to a temperature in the range of from 115 to 121°C.

The shrink ratio of the shrink tubing, i.e., the ratio of the diameter prior to the shrinking step to the diameter after the shrinking step, generally is in the range of from 1.3:1 to 5:1, in particular in the range of from 2:1 to 4:1, or from 3:1 to 4:1.

The present disclosure also provides a process for operating the sterile dead-end filtration filter assembly. The process comprises introducing a liquid through the inlet of the first sterile filter into the lumen of the plurality of semipermeable hollow fiber membranes arranged therein; filtering the liquid through the walls of the plurality of semipermeable hollow fiber membranes; removing the filtered liquid from the first sterile filter through the outlet; introducing the filtered liquid through the inlet of the second sterile filter into the lumen of the plurality of semipermeable hollow fiber membranes arranged therein; filtering the liquid through the walls of the plurality of semipermeable hollow fiber membranes; removing the filtered liquid from the second sterile filter through the outlet.

In an embodiment of the process, the liquid is introduced at a pressure of 0.5 to 4 bar(g); and the flow rate of the liquid through the sterile filter assembly (10) is in the range of from 10 to 25 ml/cm$^2$*min, measured at 20°C with water at 1.5 bar(g).

The advantages of the sterile filter assembly of the present disclosure include low cost, high flexibility, and easy processing during assembly. No injection molding is required, and after shrinking, the tube or foil will exactly fit the other components of the assembly.

Exemplary embodiments of the sterile filter assembly of the present disclosure are shown in the accompanying figures and described below.

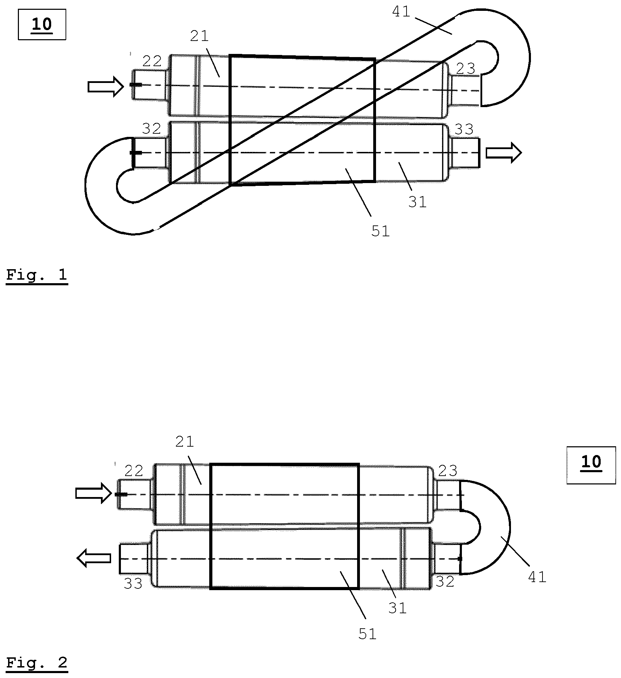

Figure 1 shows a schematic side view of an embodiment of the sterile filter assembly 10. A first sterile filter 21 having an inlet 22 and an outlet 23 for a liquid and a second sterile filter 31 having an inlet 32 and an outlet 33 for a liquid are arranged in parallel side by side. A tube 41 connects the outlet 23 of the first sterile filter 21 to the inlet 32 of the second sterile filter 31. A section of a shrink tubing 51 envelops the housings of the first sterile filter 21 and the second sterile filter 31, attaching them to each other and fastening them in a fixed position. Liquid to be filtered enters the assembly through the inlet 22 and exits through the outlet 33. The arrows indicate the flow direction of the liquid. A plurality of semipermeable hollow fiber membranes is arranged within each of the filters 21, 31 and configured for dead-end filtration of the liquid. One end of each hollow fiber membrane is in fluid communication with the inlet 22, 32 of the respective filter 21, 31, the other end is sealed. The liquid entering the inlet 22, 32 flows into the lumen of the semipermeable hollow fiber membranes, is filtered through the membrane walls, and exits the filter through the outlet 23, 33.

Figure 2 shows a schematic side view of another embodiment of the sterile filter assembly 10. A first sterile filter 21 having an inlet 22 and an outlet 23 for a liquid and a second sterile filter 31 having an inlet 32 and an outlet 33 for a liquid are arranged in antiparallel side by side. A tube 41 connects the outlet 23 of the first sterile filter 21 to the inlet 32 of the second sterile filter 31. A section of a shrink tubing 51 envelops the housings of the first sterile filter 21 and the second sterile filter 31, attaching them to each other and fastening them in a fixed position. Liquid to be filtered enters the assembly through the inlet 22 and exits through the outlet 33. The arrows indicate the flow direction of the liquid. A plurality of semipermeable hollow fiber membranes is arranged within each of the filters 21, 31 and configured for dead-end filtration of the liquid. One end of each hollow fiber membrane is in fluid communication with the inlet 22, 32 of the respective filter 21, 31, the other end is sealed. The liquid entering the inlet 22, 32 flows into the lumen of the semipermeable hollow fiber membranes, is filtered through the membrane walls, and exits the filter through the outlet 23, 33.

**List of reference signs**

10    sterile filter assembly
21    first sterile filter
22    inlet
23    outlet
31    second sterile filter
32    inlet
33    outlet
41    connecting tube
51    shrink tubing

## Claims

1. A sterile dead-end filtration filter assembly (10) comprising

    a) a first sterile filter (21) comprising a tubular housing having an inlet (22) and an outlet (23) for a liquid and having a plurality of semipermeable hollow fiber membranes arranged therein, one end of the hollow fiber membranes being in fluid communication with the inlet (22) and the other end of the hollow fiber membranes being sealed;
    b) a second sterile filter (31) comprising a tubular housing having an inlet (32) and an outlet (33) for a liquid and having a plurality of semipermeable hollow fiber membranes arranged therein, one end of the hollow fiber membranes being in fluid communication with the inlet (32) and the other end of the hollow fiber membranes being sealed;
    c) a tube (41) connecting the outlet (23) of the first filter (21) to the inlet (32) of the second filter (31); **characterized by**
    d) a shrink tubing (51) enveloping at least parts of both filters (21, 31), attaching the filters (21, 31) to each other and fastening the filters (21, 31) in a fixed position.

2. The filter assembly (10) of claim 1, wherein the first sterile filter (21) and the second sterile filter (31) are arranged in parallel.

3. The sterile filter assembly (10) of claim 1, wherein the first sterile filter (21) and the second sterile filter (31) are arranged in antiparallel.

4. The filter assembly (10) of any one of claims 1 to 3, wherein the tube (41) is also enveloped by the shrink tubing (51).

5. The filter assembly (10) of any one of claims 1 to 4, wherein the semipermeable hollow fiber membranes have a mean flow pore size, determined by capillary flow porometry, in the range of from 0.2 to 0.5 $\mu$m.

6. The filter assembly (10) of any one of claims 1 to 5, wherein the semipermeable hollow fiber membranes have an inner diameter of from 2.8 to 4.0 mm, and a wall thickness of from 100 to 500 pm, the ratio of inner diameter to wall thickness being larger than 10.

7. The filter assembly (10) of any one of claims 1 to 6, obtained by a process comprising arranging a first sterile filter (21) and a second sterile filter (31) side by side within a shrink tubing (51) and subsequently heating the shrink tubing (51) to shrink it and to attach the filters (21, 31) to each other and fasten them in a fixed position.

8. The filter assembly (10) of any one of claims 1 to 6, obtained by a process comprising arranging a first sterile filter (21) and a second sterile filter (31) side by side within a shrink tubing (51), additionally arranging a tube (41) connecting an outlet (23) of the first sterile filter (21) to an inlet (32) of the second sterile filter (31) within the shrink tubing (51), and subsequently heating the shrink tubing (51) to shrink it and to attach the filters (21, 31) to each other and fasten them in a fixed position.

9. A process for operating the sterile dead-end filtration filter assembly (10) of any one of claims 1 to 8, comprising introducing a liquid through the inlet (22) of the first sterile filter (21) into the lumen of the plurality of semipermeable hollow fiber membranes arranged therein; filtering the liquid through the walls of the plurality of semipermeable hollow fiber membranes; removing the filtered liquid from the first sterile filter (21) through the outlet (23); introducing the filtered liquid through the inlet (32) of the second sterile filter (31) into the lumen of the plurality of semipermeable hollow fiber membranes arranged therein; filtering the liquid through the walls of the plurality of semipermeable hollow fiber membranes; removing the filtered liquid from the second sterile filter (31) through the outlet (33).

10. The process of claim 9, wherein the liquid is introduced at a pressure of 0.5 to 4 bar(g); and the flow rate of the liquid through the filter assembly (10) is in the range of from 10 to 25 ml/cm$^2$*min, measured at 20°C with water at 1.5 bar(g).

## Patentansprüche

1. Filteranordnung (10) zur Dead-end-Sterilfiltration, umfassend

    a) einen ersten Sterilfilter (21), umfassend ein rohrförmiges Gehäuse mit einem Einlass (22) und einem Auslass (23) für eine Flüssigkeit und mit mehreren darin angeordneten semipermeablen Hohlfasermembranen, wobei ein Ende der Hohlfasermembranen in Fluidverbindung mit dem Einlass (22) steht und das andere Ende der Hohlfasermembranen versiegelt ist;
    b) einen zweiten Sterilfilter (31), umfassend ein rohrförmiges Gehäuse mit einem Einlass (32) und einem Auslass (33) für eine Flüssigkeit und mit mehreren darin angeordneten semipermeablen Hohlfasermembranen, wobei ein Ende der Hohlfasermembranen in Fluidverbindung mit dem Einlass (32) steht und das andere Ende der Hohlfasermembranen versiegelt ist;

c) eine Röhre (41), die den Auslass (23) des ersten Filters (21) mit dem Einlass (32) des zweiten Filters (31) verbindet;

**dadurch gekennzeichnet, dass**

d) ein Schrumpfschlauch (51) zumindest Teile beider Filter (21, 31) umhüllt, die Filter (21, 31) aneinander befestigt und die Filter (21, 31) ortsfest fixiert.

2. Filteranordnung (10) nach Anspruch 1, worin der erste Sterilfilter (21) und der zweite Sterilfilter (31) parallel angeordnet sind.

3. Filteranordnung (10) nach Anspruch 1, worin der erste Sterilfilter (21) und der zweite Sterilfilter (31) antiparallel angeordnet sind.

4. Filteranordnung (10) nach einem der Ansprüche 1 bis 3, worin die Röhre (41) ebenfalls von dem Schrumpfschlauch (51) umhüllt ist.

5. Filteranordnung (10) nach einem der Ansprüche 1 bis 4, worin die semipermeablen Hohlfasermembranen eine mittlere Durchflussporengröße, bestimmt durch Kapillarfluss-Porometrie, im Bereich von 0,2 bis 0,5 $\mu$m aufweisen.

6. Filteranordnung (10) nach einem der Ansprüche 1 bis 5, wobei die semipermeablen Hohlfasermembranen einen Innendurchmesser von 2,8 bis 4,0 mm und eine Wandstärke von 100 bis 500 $\mu$m aufweisen, wobei das Verhältnis von Innendurchmesser zu Wandstärke größer als 10 ist.

7. Filteranordnung (10) nach einem der Ansprüche 1 bis 6, erhalten durch ein Verfahren umfassend das Anordnen eines ersten Sterilfilters (21) und eines zweiten Sterilfilters (31) nebeneinander innerhalb eines Schrumpfschlauchs (51) und anschließendes Erhitzen des Schrumpfschlauchs (51), um ihn zu schrumpfen und die Filter (21, 31) aneinander zu befestigen und ortsfest zu befestigen.

8. Filteranordnung (10) nach einem der Ansprüche 1 bis 6, erhalten durch ein Verfahren umfassend das Anordnen eines ersten Sterilfilters (21) und eines zweiten Sterilfilters (31) nebeneinander innerhalb eines Schrumpfschlauchs (51), zusätzlich Anordnen eines Schlauchs (41), der einen Auslass (23) des ersten Sterilfilters (21) mit einem Einlass (32) des zweiten Sterilfilters (31) verbindet, innerhalb des Schrumpfschlauchs (51) und anschließendes Erhitzen des Schrumpfschlauchs (51), um ihn zu schrumpfen und die Filter (21, 31) aneinander zu befestigen und ortsfest zu befestigen.

9. Verfahren zum Betreiben der sterilen Dead-End-Filtrations-Filteranordnung (10) nach einem der Ansprüche 1 bis 8, umfassend das Einbringen einer Flüssigkeit durch den Einlass (22) des ersten Sterilfilters (21) in das Lumen der mehreren darin angeordneten semipermeablen Hohlfasermembranen; Filtern der Flüssigkeit durch die Wände der mehreren semipermeablen Hohlfasermembranen; Entfernen der gefilterten Flüssigkeit aus dem ersten Sterilfilter (21) durch den Auslass (23); Einbringen der gefilterten Flüssigkeit durch den Einlass (32) des zweiten Sterilfilters (31) in das Lumen der mehreren darin angeordneten semipermeablen Hohlfasermembranen; Filtern der Flüssigkeit durch die Wände der mehreren semipermeablen Hohlfasermembranen; Entfernen der gefilterten Flüssigkeit aus dem zweiten Sterilfilter (31) durch den Auslass (33).

10. Verfahren nach Anspruch 9, wobei die Flüssigkeit mit einem Druck von 0,5 bis 4 bar(g) eingebracht wird; und die Durchflussrate der Flüssigkeit durch die Filteranordnung (10) im Bereich von 10 bis 25 ml/cm$^2$*min liegt, gemessen bei 20°C mit Wasser bei 1,5 bar(g).

## Revendications

1. Ensemble filtrant (10) de filtration stérile sans issue comprenant

a) un premier filtre stérile (21) comprenant un boîtier tubulaire ayant une entrée (22) et une sortie (23) pour un liquide et dans lequel est disposée une pluralité de membranes à fibres creuses semi-perméables, une extrémité des membranes à fibres creuses étant en communication fluide avec l'entrée (22) et l'autre extrémité des membranes à fibres creuses étant scellée ;

b) un deuxième filtre stérile (31) comprenant un boîtier tubulaire ayant une entrée (32) et une sortie (33) pour un liquide et dans lequel est disposée une pluralité de membranes à fibres creuses semi-perméables, une extrémité des membranes à fibres creuses étant en communication fluide avec l'entrée (32) et l'autre extrémité des membranes à fibres creuses étant scellée ;

c) un tube (41) reliant la sortie (23) du premier filtre (21) à l'entrée (32) du deuxième filtre (31) ;

**caractérisé par**

d) une gaine thermorétractable (51) enveloppant au moins des parties des deux filtres (21, 31), fixant les filtres (21, 31) l'un à l'autre et fixant les filtres (21, 31) dans une position fixe.

2. Ensemble filtrant (10) selon la revendication 1, dans lequel le premier filtre stérile (21) et le deuxième filtre stérile (31) sont disposés en parallèle.

3. Ensemble filtrant (10) selon la revendication 1, dans lequel le premier filtre stérile (21) et le deuxième filtre stérile (31) sont disposés de manière antiparallèle.

4. Ensemble filtrant (10) selon l'une quelconque des revendications 1 à 3, dans lequel le tube (41) est également enveloppé par la gaine thermorétractable (51).

5. Ensemble filtrant (10) selon l'une quelconque des revendications 1 à 4, dans lequel les membranes semi-perméables à fibres creuses ont une taille moyenne de pores d'écoulement, déterminée par porométrie à écoulement capillaire, dans la plage de 0,2 à 0,5 $\mu$m.

6. Ensemble filtrant (10) selon l'une quelconque des revendications 1 à 5, dans lequel les membranes semi-perméables à fibres creuses ont un diamètre intérieur de 2,8 à 4,0 mm, et une épaisseur de paroi de 100 à 500 $\mu$m, le rapport du diamètre intérieur à l'épaisseur de paroi étant supérieur à 10.

7. Ensemble filtrant (10) selon l'une quelconque des revendications 1 à 6, obtenu par un procédé comprenant la disposition d'un premier filtre stérile (21) et d'un deuxième filtre stérile (31) côte à côte à l'intérieur d'une gaine thermorétractable (51) puis chauffer la gaine thermorétractable (51) pour la rétrécir et pour fixer les filtres (21, 31) l'un à l'autre et les fixer dans une position fixe.

8. Ensemble filtrant (10) selon l'une quelconque des revendications 1 à 6, obtenu par un procédé comprenant la disposition d'un premier filtre stérile (21) et d'un deuxième filtre stérile (31) côte à côte à l'intérieur d'une gaine thermorétractable (51), en outre disposer un tube (41) reliant une sortie (23) du premier filtre stérile (21) à une entrée (32) du deuxième filtre stérile (31) à l'intérieur de la gaine thermorétractable (51), puis chauffer la gaine thermorétractable (51) pour la rétrécir et pour attacher les filtres (21, 31) l'un à l'autre et les fixer dans une position fixe.

9. Procédé pour opérer l'ensemble filtrant (10) de filtration stérile sans issue selon l'une quelconque des revendications 1 à 8, comprenant l'introduction d'un liquide à travers l'entrée (22) du premier filtre stérile (21) dans le lumen de la pluralité de membranes semi-perméables à fibres creuses disposées à l'intérieur ; filtrer le liquide à travers les parois de la pluralité de membranes semi-perméables à fibres creuses ; retirer le liquide filtré du premier filtre stérile (21) à travers la sortie (23) ; introduire le liquide filtré à travers l'entrée (32) du deuxième filtre stérile (31) dans le lumen de la pluralité de membranes semi-perméables à fibres creuses disposées à l'intérieur ; filtrer le liquide à travers les parois de la pluralité de membranes semi-perméables à fibres creuses ; retirer le liquide filtré du deuxième filtre stérile (31) à travers la sortie (33) .

10. Procédé selon la revendication 9, dans lequel le liquide est introduit sous une pression de 0,5 à 4 bar(g) ; et le débit du liquide à travers l'ensemble filtre (10) est compris entre 10 et 25 ml/cm$^2$*min, mesuré à 20°C avec de l'eau à 1,5 bar(g).

**10**

41

21

22

23

32

33

31

51

**Fig. 1**

21

22

23

**10**

33

32

31

41

51

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4267053 A
- EP 3388141 A1

- US 7622041 B2